# FASCICULE DE BREVET EUROPEEN

(11) **EP 0 391 758 B1**
(45) Date de publication et mention de la délivrance du brevet: **03.08.1994**
(21) Numéro de dépôt: 90400742.4
(22) Date de dépôt: 19.03.1990
(51) Int. Cl.: F16D 1/10, F16D 1/08

(54) **Dispositif rapide d'accouplement d'arbres menant et mené et son application notamment à une direction d'automobile**
Schnellkupplung zum Verbinden von Antriebs- und Abtriebswelle und Anwendung derselben bei der Kraftwagenlenkung
Quick-coupling device for connecting driving and driven shafts, and use of same, especially for steering a motor vehicle

(30) Priorité: 07.04.1989 FR 8904622
(43) Date de publication de la demande: 10.10.1990
(73) Titulaire: NACAM, F-41100 Vendôme (FR)
(72) Inventeur: Van Gelderen, Arjen, F-41100 Vendôme (FR)
(74) Mandataire: Phélip, Bruno

(56) Documents cités:
- EP-A- 0 292 442
- DE-A- 3 228 889
- FR-A- 1 496 227
- FR-A- 2 067 783
- US-A- 2 017 123
- US-A- 3 220 757
- US-A- 3 998 560

## Description

L'invention concerne les accouplements qui permettent de réunir un arbre menant à un arbre mené, tels notamment une tige à queue de section non-circulaire et un étrier de section en U et, plus particulièrement, a pour objet un dispositif d'accouplement de ce type à mise en place rapide et aussi sûr, aussi bien pendant cette opération qu'en fonctionnement.

Dans de nombreux secteurs techniques, il est nécessaire d'accoupler deux arbres par exemple une tige avec un élément tel un étrier qui sont chacun associés à l'un des arbres, de manière à les solidariser en rotation.

Ce type de situation se rencontre par exemple dans l'industrie automobile lorsqu'il faut associer la tige d'un pignon d'un boîtier de direction à la mâchoire d'un joint de cardan solidaire d'un des arbres d'une colonne de direction.

Une technique actuellement utilisée consiste à faire en sorte que l'étrier associé à l'arbre à solidariser à la queue de pignon à section non-circulaire soit relié à l'une des mâchoires du joint de cardan de manière à pouvoir basculer autour de l'un des axes du croisillon de cardan et à faire en sorte que cet étrier vienne coiffer la queue à section non-circulaire du pignon lorsqu'il est rabattu sur celle-ci par basculement. La queue de section non circulaire qui se trouve alors emprisonnée dans l'étrier sans pouvoir tourner est immobilisée à l'aide de moyens de blocage.

Ces moyens de blocage sont habituellement constitués d'une tige filetée, munie à sa périphérie de cames, que l'on enfile dans l'étrier puis que l'on serre sur ce dernier à l'aide d'un écrou. On fait tourner la tige de manière que les cames de sa périphérie viennent chasser vers le fond de l'étrier la queue à section non-circulaire, puis on serre celle-ci en vissant l'écrou sur la partie filetée de la tige qui fait saillie hors de l'étrier. Si l'on utilise un écrou équipé d'un frein, après quelques tours d'écrou, la tige rencontre le frein et le couple de serrage augmente; en poursuivant le vissage de l'écrou, celui-ci entraîne en rotation avec lui la tige dont l'une des cames vient en contact avec la queue qu'elle chasse alors vers le fond de l'étrier; un complément de vissage assure ensuite le blocage.

Si une telle technique donne, généralement, satisfaction, elle est loin d'être sans inconvénients à l'assemblage.

D'autre part, si les moyens de blocage viennent à se désserrer et à échapper à l'étrier en fonctionnement, ce dernier risque de se dégager et les deux arbres initialement accouplés ne sont plus solidarisés. Cette situation insidieuse est, on l'imagine aisément, particulièrement gênante s'il s'agit d'une direction d'automobile.

Un tel assemblage est habituellement conduit dans le compartiment moteur d'un véhicule où la place est particulièrement comptée. Pour mettre en place la tige et l'écrou, l'opérateur doit utiliser simultanément ses deux mains. Ceci est particulièrement délicat si on se rappelle qu'outre l'emplacement libre restreint dont dispose l'opérateur, l'accès en est très souvent mal commode : ceci gêne considérablement la mise en place et l'utilisation d'équipements de vissage automatiques à air comprimé ou à moteur électrique.
Il est également connu, par le document DE-A-3.228.889, un dispositif d'accouplement de deux arbres, dont l'un se termine par une tige, et l'autre par un élément femelle destiné à recevoir cette tige, les deux arbres tournant suivant un axe commun. La tige et l'élément femelle ont deux surfaces en contact convergentes et inclinées l'une par rapport à l'autre en un V. Le contact est assuré par un coin poussé par un ressort, et coulissant dans l'élément femelle. Pour assurer l'accouplement, il est nécessaire d'engager axialement la tige dans l'élément femelle, ce qui présente l'inconvénient de nécessiter le recul axial de la tige avant son engagement avec comme conséquence une augmentation de l'encombrement de ce dispositif. De plus lors de l'engagement, il est nécessaire de comprimer le ressort.

L'invention a pour but de remédier aux inconvénients de la technique connue notamment à ceux rappelés brièvement, en faisant en sorte que le dispositif proposé soit d'un montage rapide et sûr et puisse être mis en place facilement.

L'invention a pour objet un dispositif pour l'accouplement d'un arbre menant et d'un arbre mené aptes à tourner suivant un axe commun notamment pour réunir une tige à queue de section non-circulaire et un étrier de section en U orientable suivant une direction orthogonale à cet axe et aux branches du U qui se font face, et muni d'un dispositif de blocage pour emprisonner et serrer cette queue dans le couloir que délimitent ces branches.

Le dispositif selon l'invention pour l'accouplement d'une tige à queue non-circulaire et d'une chape avec un étrier en U qui sont associées l'une à un arbre menant et l'autre à un arbre mené et qui sont aptes à tourner suivant un axe commun et où, d'une part, cette queue présente deux parois convergentes et inclinées relativement l'une à l'autre en un V dont le sommet est dans un plan passant par cet axe ainsi qu'une face d'appui à l'opposé du sommet du V et où, d'autre part, cet étrier présente deux branches en vis-à-vis reliées par un pont qui délimitent ensemble un couloir axial longitudinal ouvert à l'une au moins de ses extrémités et débouchant à sa périphérie parallèlement à cet axe commun par un orifice ainsi que deux parois convergentes en regard et inclinées relativement l'une à l'autre en un V dont le sommet est à l'opposé de cet orifice et orientable par basculement suivant une direction perpendiculaire à cet axe commun et approximativement à ces branches et où ces parois sont destinées à venir en contact lorsqu'on fait basculer cette chape autour de cette direction à partir d'une position où ce couloir est incliné par rapport à cet axe commun et distant de cette queue, pour la lui faire chevaucher en l'y faisant pénétrer latéralement par cet orifice. Ce dispositif est remarquable en ce qu'il comprend une surface de guidage sur la périphérie de la chape, une douille enveloppant localement la chape et munie d'une portée coopérant avec cette surface de guidage de manière à pouvoir se déplacer relativement entre une première position de montage où cet orifice est libre et une seconde position d'accouplement où cet orifice est au moins partiellement masqué, et aussi munie d'une protubérance engagée dans cet orifice et destinée à venir en contact avec cette face d'appui, des moyens de sollicitation élastiques interposés entre cette chape et cette douille pour tendre normalement à placer la douille vers sa seconde position d'accouplement, un verrou coopérant avec la chape et la douille pour retenir cette dernière dans sa première position de montage à l'encontre de la sollicitation élastique et une came portée par cet étrier et une contre-came portée par ces douille et queue ou étrier, ces came et contre-came étant orientées de manière que lorsque la douille passe de sa première à sa seconde position, sa protubérance presse sur cette face d'appui et applique les unes contre les autres ces parois en faisant en sorte que les sommets des V tendent à se rapprocher.

D'autres caractéristiques de l'invention ressortiront de la lecture de la description et des revendications qui suivent et de l'examen du dessin annexé, donné seulement à titre d'exemple, où :
- la Figure 1 est une élévation d'un mode de réalisation d'un dispositif suivant l'invention dans sa position de présentation lorsque la douille occupe sa première position de montage;
- les Figures 2A et 2B sont respectivement une élévation et une section selon le plan B-B du dispositif de la Figure 1 lorsque la douille occupe sa seconde position d'accouplement, les arbres étant solidaires en rotation;
- les Figures 3A et 3B sont des vues analogues à celle des Figures 2A et 2B d'une variante d'exécution;
- les Figures 4A et 4B sont des vues analogues à celles des Figures 2 et 3, correspondantes, d'une autre variante de réalisation d'un dispositif selon l'invention et;
- les Figures 5A et 5B sont une coupe longitudinale méridienne et une section selon le plan B-B d'une autre variante de réalisation de l'invention.

Dans ce qui suit, on ne traitera que de ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans la description qui suit, on utilise toujours un même numéro de référence pour désigner un élément homologue quel que soit le mode ou la variante de réalisation.

Afin de bien illustrer l'invention, on supposera que celle-ci est faite à propos de son application à une direction d'automobile et que, d'une part, la chape en question est solidaire des mâchoires d'un cardan et que, d'autre part, la tige à queue non-circulaire est solidaire d'un pignon, par exemple d'un boîtier de direction.

Pour la commodité de la description, on décrira les différents constituants de l'invention avant d'en exposer le fonctionnement.

Le dispositif selon l'invention, pour cette application, est destiné à réunir un arbre menant à un arbre mené qui sont ici une tige 10 et une chape 20, respectivement. Ces arbres peuvent tourner suivant un axe commun X-X.

La tige 10 est, par exemple, reliée à un pignon non représenté alors que la chape 20 est, elle, solidaire d'une mâchoire de joint de cardan, dont seule la mâchoire est représentée.

Comme on le voit, la tige 10 présente une queue 11 à section non-circulaire. Cette queue 11 présente deux parois convergentes et inclinées relativement l'une à l'autre en un V dont le sommet est dans un plan passant par l'axe X-X. Dans ce mode de réalisation au moins l'une de ces parois et, de préférence, les deux sont deux méplats 111 plans et parallèles à l'axe commun X-X. On observera aussi que ces deux parois ou méplats 111 sont inclinés en V relativement l'un à l'autre de manière à délimiter entre eux une face d'appui 112 à l'opposé du sommet du V. Cette face d'appui a, par exemple, une section droite en arc de cercle centrée sur l'axe commun, comme dessiné ou bien une section droite rectiligne et oblique par rapport à une droite passant par la trace de cet axe dans le plan de section.

La chape 20 est munie d'un étrier 21 en U qui présente deux branches 22 en regard reliées par un pont 23. Ces branches et ce pont délimitent, ensemble, un couloir 210 axial longitudinal ouvert à l'une au moins de ses extrémités et débouchant à la périphérie de la chape, parallèlement à l'axe X-X, par un orifice 24. Ce couloir 210 présente deux parois convergentes en regard et inclinées relativement l'une à l'autre en un V dont le sommet est à l'opposé de cet orifice 24. Dans ce mode de réalisation au moins l'une de ces parois, et de préférence les deux, sont deux flancs 211 plans et parallèles à l'axe X-X. Ces flancs 211 sont inclinés en V relativement l'un à l'autre comme on peut l'observer.

Cette chape est orientable suivant une direction 25 perpendiculaire à cet axe X-X et approximativement à ces branches 22.

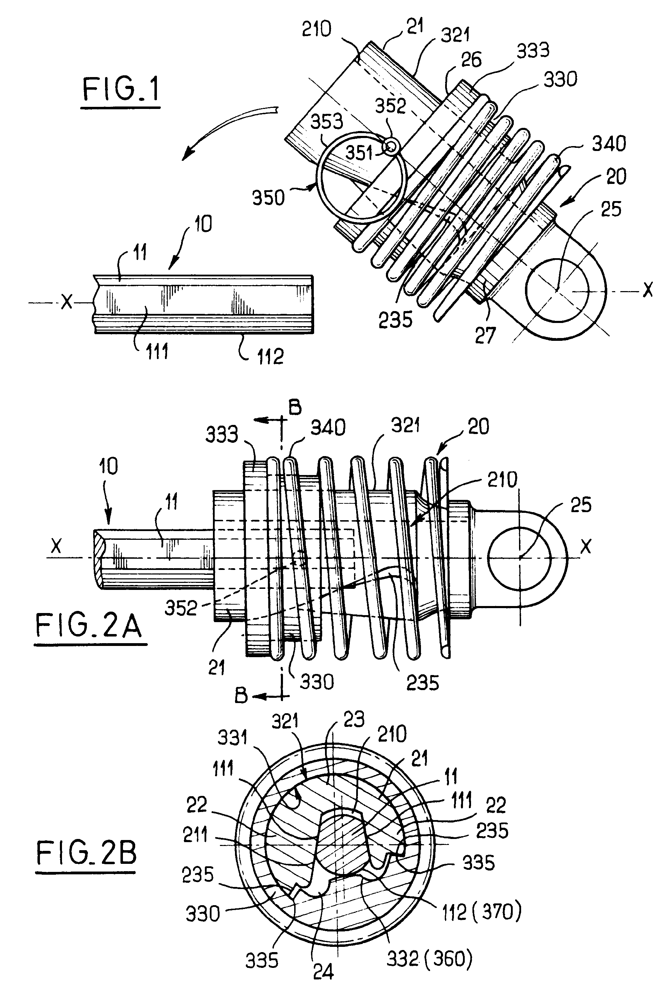

De la sorte, on voit que cette chape peut occuper une première position de présentation où ce couloir est inclinée par rapport à cet axe commun et distant de la queue de la tige, comme illustré sur la Figure 1. A partir de cette position de présentation, on peut faire basculer la chape suivant sa direction 25, dans le sens indiqué par une flèche, pour que le couloir chevauche la queue en l'y faisant pénétrer latéralement par cet orifice afin que les méplats et flancs viennent au contact, comme cela ressort de la Figure 2.

Comme on le voit sur le dessin, la périphérie de la chape 20 porte une surface de guidage 321, de préférence cylindrique à section droite circulaire et coaxiale à l'axe X-X.

Sur cette chape et l'enveloppant localement, est disposée une douille fourreau ou analogue 330 qui est muni d'une portée 331 coopérant avec la surface de guidage 321 dont elle est complémentaire. Cette douille peut être fermée latéralement, comme dessiné, ou bien ouverte.

Le montage de la douille sur la chape est tel que la douille peut se déplacer relativement entre une première position de montage où l'orifice 24 est libre (Figure 1) et une seconde position d'accouplement où cet orifice est au moins partiellement masqué et clos (Figure 2A). Cette douille est munie d'une protubérance 332 engagée dans l'orifice 24 et destinée à venir au contact de la face d'appui 112 de la queue, comme on le comprendra par la suite. En section droite, cette protubérance a, de préférence, un profil courbe.

La chape 20 présente un épaulement 27 et la douille 330 un support 333, par exemple en forme de deux arcs de couronne ou oreilles, faisant saillie vers l'extérieur de chaque côté, approximativement dans le prolongement des machoires.

Des moyens de sollicitation élastiques 340, par exemple un ressort à boudin, sont interposés entre cette chape 20 et cette douille 330 pour tendre a normalement placer la douille vers sa seconde position d'accouplement, et reposent contre ces épaulement et support.

Le dispositif comprend aussi un verrou 350 coopérant avec la chape et la douille pour retenir cette dernière dans sa première position de montage, à l'encontre de la sollicitation élastique. Dans ce mode de réalisation, ce verrou est constitué d'une goupille 351 engagée dans des trous 352 de la chape 20 et munie d'un anneau de préhension 353. Cette goupille, amovible, est destinée à reposer contre la tranche 26 de la douille.

Dans le mode de réalisation illustré sur les Figures 1 et 2, l'étrier 20 est muni d'une rampe périphérique 235, hélicoïdale, disposée sur la trajectoire que décrit la douille lorsqu'elle passe de l'une à l'autre de ses deux positions. La douille 330 est, elle, munie d'une contre-rampe 335 destinée à coopérer avec la rampe 235 de la chape, en reposant sur elle.

Grâce à un tel montage, on comprend que la douille, lorsqu'elle se déplace de l'une à l'autre de ses deux positions, subit une rotation et une translation, c'est-à-dire décrit un arc d'hélice.

Une came 360 est portée par la douille 330 et une contre-came 370 par la queue 11. Dans ce mode de réalisation, cette came 360 est confondue avec la protubérance 332 et la contre-came 370 avec la face d'appui 112.

On observera, en regardant attentivement la Figure 2B, que la protubérance-came 332-360 tourne sa concavité à l'opposé de l'axe X-X et est, de préférence excentrée et ne se trouve pas située sur l'axe X-X. On comprend donc que lorsque la douille tourne, cette protubérance-came tend à s'approcher ou à s'éloigner de l'axe X-X, suivant le sens du déplacement. Selon l'invention, la distance à l'axe de la protubérance-came décroît lorsque la douille se déplace de sa première à sa seconde position et les génératrices de la face d'appui-contre-came 112-370 sont parallèles à l'axe X-X.

Le fonctionnement est le suivant.

On se reportera à la Figure 1, le dispositif d'accouplement selon l'invention se trouve initialement dans la position de présentation où il est illustré. La chape et la tige sont d'abord correctement orientées en rotation de manière qu'approximativement les sommets des V de leurs méplats et flancs respectifs soient situés d'un même côté de l'axe X-X. On rabat alors l'étrier en faisant basculer la chape autour de la direction 25, dans le sens de la flèche, de manière à lui faire coiffer la queue de la tige.

Ceci fait, on saisit l'anneau de la goupille et on tire sur celui-ci pour arracher la goupille et la séparer totalement de la chape. Sous l'action du ressort à boudin qui était initialement bandé comme cela apparaît sur la Figure 1, la douille maintenant libérée est repoussée dans le sens opposé à celui de la direction 25, c'est-à-dire vers la queue. Sous cet effort, les rampe et contre-rampe hélicoïdales, dirigent la douille qui tourne en même temps qu'elle coulisse. Simultanément, la protubérance-came 332-360 se déplace et se rapproche donc de l'axe X-X tout en allant à la rencontre de la face d'appui-contre-came 112-370 de la queue : sous l'action développée par le ressort, la protubérance-came exerce une force radiale centripète sur la face d'appui, repousse la queue dans le couloir et applique fortement les parois, méplats et les flancs inclinés les uns contre les autres en les coinçant.

On voit donc que l'on a obtenu ainsi une liaison indéfectible de l'arbre mené et de l'arbre menant par coincement sans jeu et cela ausi bien radialement qu'axialement.

La longueur du couloir est, de préférence, plus grande que la longueur de la queue de manière à pouvoir tenir compte des dispersions de cotes de fabrication ou d'empilement de cotes au montage.

Si au cours du fonctionnement du jeu devait apparaître, l'effort développé par le ressort contriburait à le rattrapper automatiquement.

On voit de même que la queue est maintenant emprisonnée dans le couloir dont l'ouverture a été au moins localement obturée par la douille.

En choisissant convenablement l'effort que peut développer le ressort, l'accouplement est rendu pratiquement irréversible. Toutefois, si pour une raison quelconque on souhaite pouvoir désolidariser les arbres menant et mené, il suffit de répéter les opérations dans l'ordre inverse. Par exemple pour faciliter le désaccouplement, on munit la collerette de la douille d'une section non-circulaire, par exemple hexagonale, de manière qu'on puisse la saisir au besoin à l'aide d'une clé et la faire tourner à l'encontre de l'effort exercé par le ressort en tenant compte des coefficients de frottement et de la pente des rampes.

Si nécessaire, si l'on dispose judicieusement les trous dans lesquels la goupille est engagée lorsqu'elle maintient la douille dans sa première position, on peut réenfiler cette goupille ou une autre tige ou clavette dans ces trous de manière à verrouiller et condamner la douille dans sa seconde position pour l'empêcher de reculer et ainsi lui interdire de libérer l'ouverture du couloir. On observera que le rattrapage de jeu est toutefois toujours possible.

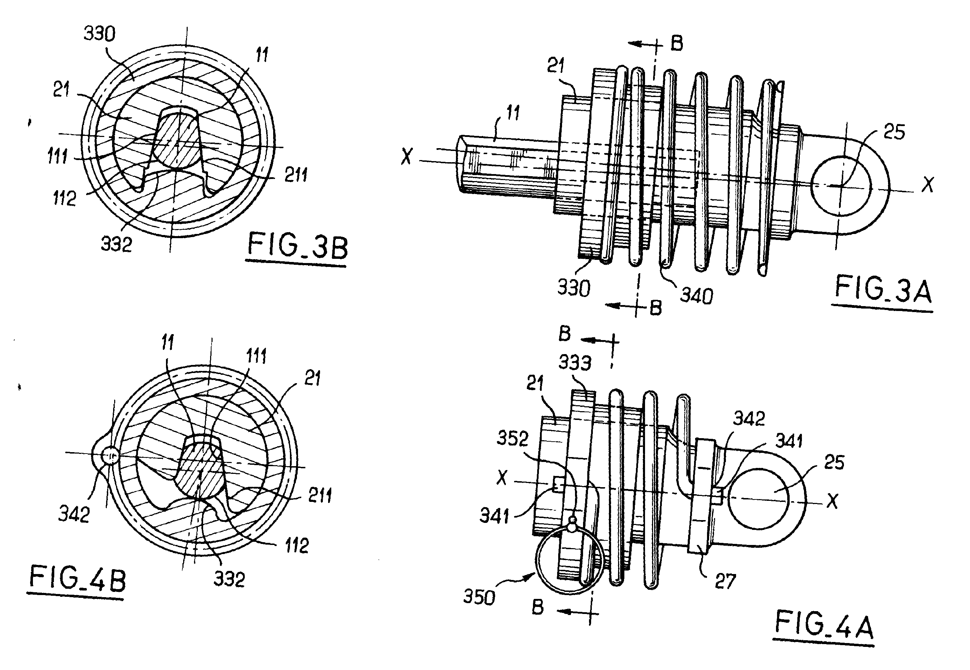

En se reportant aux vues de la Figure 3, on voit que le mode de réalisation qui y est représenté diffère de celui du mode de réalisation précédent par l'absence de rampe et de contre-rampe et par le fait que la face d'appui-contre-came 112-370 présente des génératrices inclinées relativement à l'axe X-X de manière que sa distance va croissant dans le sens correspondant au passage de la douille de sa première à sa seconde position. On produit ainsi un coincement radial des méplats et flancs et aussi un coincement axial de la protubérance-came 332-360 sur la face d'appui-contre-came 112-370. Dans ce mode de réalisation, la douille est seulement mobile en translation.

La mise en oeuvre de ce mode de réalisation est analogue à celle du mode de réalisation précédent à l'exception du fait que la douille est seulement montée coulissante parallèlement à l'axe X-X.

En se reportera maintenant au mode de réalisation illustré sur les vues de la Figure 4. Dans ce mode de réalisation, les bouts 341 du ressort 340 sont recourbés pour être parallèles à l'axe X-X. Ces bouts sont engagés dans des yeux 342 pratiqués dans le support de la douille et dans l'épaulement de la chape. Le ressort 340 exerce un couple de torsion. La protubérance-came est ici encore de préférence excentrée par rapport à l'axe X-X. On voit donc qu'ici, comme dans le mode de réalisation des Figures 1 et 2, en tournant la protubérance-came repousse la face d'appui-contre-came pour coincer les méplats et les flancs. S'il y a lieu, la surface d'appui est aussi inclinée comme dans le mode de la réalisation des Figures 3, de manière à obtenir en plus un coincement axial.

Dans les modes de réalisation décrits et représentés de l'invention, chape et douille sont mobiles relativement avec des déplacements en hélice en translation ou en rotation. Il va de soi que l'on peut aussi associer rotation et translation dans un ordre indifférent en utilisant une gorge ou rainure ou analogue en équerre avec une aile parallèle à l'axe et un téton ou similaire engagée dans cette gorge. Si la rotation précède la translation, l'aile orthogonale à l'axe sert de verrou.

De même le verrou est une goupille amovible. Pratiquement cette goupille peut être frangible et se rompre lors du basculement par l'impact de cette goupille sur la queue.

La face d'appui-contre-came peut, en section droite, avoir un profil rectiligne oblique orienté correctement.

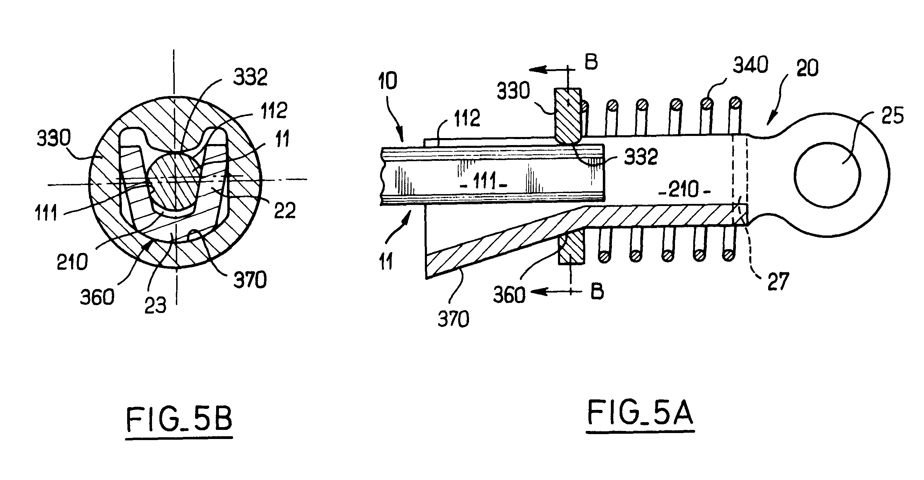

Comme on l'a compris, ce qui est important suivant l'invention, c'est que la génératrice de contact mobile entre came et contre-came soit inclinée par rapport à l'axe de manière que lorsque la douille se déplace de sa première vers sa seconde position, une force radiale centripète soit créée pour tendre à faire se rapprocher les sommets des V des parois convergentes correspondantes de la queue et du couloir de l'étrier. Les rôles et les structures propres à ces came et contre-came peuvent être permutés. Ainsi, par exemple, d'une part, la contre-came 370 peut être ménagée sur l'arête sommitale de l'étrier à la manière de plans inclinés dont la distance à l'axe X-X va croissant à mesure qu'on s'éloigne de la direction 25 et, d'autre part, la came 360 peut être ménagée sur la douille à l'opposé de la protubérance et en vis-à-vis de celle-ci à la manière de plans inclinés dans le même sens (cf Figure 5).

Les angles des V complémentaires des méplats et flancs et de contact entre came et contre-came tiennent compte des coefficients de frottement des surfaces et du ressort pour obtenir, s'il y a lieu, d'une liaison irréversible.

La douille, lorsqu'elle est ouverte, peut se présenter à la manière d'une plaquette dont les bords parallèles à l'axe X-X sont recourbés en crochets en C en regard et placés du côté de la protubérance. Ces rebords coopèrent alors avec des ailes placées aux bords libres des branches de l'étrier et orientées parallèlement à l'axe X-X et tournées dos-à-dos; la douille coulisse alors sur la chape à la manière d'un tiroir guidé par ces crochets et ailes engagés les uns dans les autres.

L'étrier est par exemple fait en tôle épaisse, pliée et roulée et la douille faite en tôle épaisse emboutie.

On saisit immédiatement de ce qui précède tous les avantages du dispositif suivant l'invention puisqu'il permet très aisément et dans des lieux où l'espace est compté et l'accès difficile, d'accoupler l'un à l'autre des arbres menant et mené et cela sans jeu ni radial ni axial et à l'aide d'une manipulation extrêmement simple qui consiste en un basculement de la chape seule ou avec l'arbre qui la porte et en une action sur un verrou qui maintenait le dispositif bandé dans sa position de présentation afin de le libérer pour qu'il passe dans sa position d'accouplement.

Tout ceci est fait sans l'aide ni d'outils ni d'équipements auxiliaires.

## Revendications

1. Dispositif pour l'accouplement d'une tige (10) à queue (11) non-circulaire et d'une chape (20) avec un étrier (21) en U associées l'une à un arbre menant et l'autre à un arbre mené et aptes à tourner suivant un axe commun (X-X) où ;
- d'une part, cette queue (11) présente deux parois (111) convergentes et inclinées relativement l'une à l'autre en un V dont le sommet est dans un plan passant par cet axe (X-X) ainsi qu'une face d'appui (112) à l'opposé du sommet du V et où ;
- d'autre part, cet étrier (21) présente deux branches (22) reliées par un pont (23) qui délimitent ensemble un couloir (210) axial longitudinal ouvert à l'une au moins de ces extrémités et débouchant à la périphérie parallèlement à l'axe (X-X) par un orifice (24) et qui présente deux parois (211) convergentes en regard et inclinées relativement l'une à l'autre en un V dont le sommet est à l'opposé de cet orifice (24) ;
- et où l'étrier (21) est orientable par basculement suivant une direction (25) perpendiculaire à cet axe (X-X) et approximativement à ces branches (22), de manière que l'étrier (21) occupe une position de présentation où ce couloir (210) est incliné par rapport à cet axe (X-X) commun et distant de cette queue (11), et qu'à partir de cette position de présentation, l'étrier (21) bascule autour de cette direction (25) pour que la queue (11) pénètre latéralement dans l'orifice (24) de l'étrier (21) afin que le couloir (210) de l'étrier (21) chevauche la queue (11) et que les deux parois (211) de l'étrier (21) viennent en contact respectivement avec les deux parois (111) de la queue (11),
dispositif caractérisé en ce qu'il comprend :
- une surface de guidage (321) sur la périphérie de la chape (20);
- une douille (330) enveloppant localement la chape (20) et munie d'une portée (331) coopérant avec la surface de guidage (321) de la chape 20, la douille (330) étant munie d'une protubérance (332) engagée dans l'orifice (24) de l'étrier (21) et destinée à venir au contact de la face d'appui (112) de la queue (11) de manière que la douille (330) puisse se déplacer relativement sur la chape (20) entre deux positions : une première position de montage où cet orifice (24) est libre, et une seconde position d'accouplement où cet orifice (24) est au moins partiellement masqué et clos ;
- des moyens de sollicitation élastiques (340) interposés entre cette chape (20) et cette douille (330) pour pousser la douille (330) vers sa seconde position d'accouplement ;
- un verrou (350) coopérant avec la chape (20) et la douille (330) pour retenir cette dernière dans sa première position de montage à l'encontre de la sollicitation élastique et,
- une came (360) et une contre-came (370) portées par ces douille (330) et queue (11) ou étrier (21), ces came (360) et contre-came (370) ayant leur génératrice de contact mobile orientée de manière que lorsque la douille (330) passe de sa première position vers sa seconde position sa protubérance (332) presse sur la face d'appui (112) de la queue (11) et applique les unes contre les autres ces parois (111, 211) en faisant en sorte que le sommet du V des deux parois (111) de la queue (11) et le sommet du V des deux parois (211) de la chape (20) tendent à se rapprocher l'un de l'autre.

2. Dispositif selon la revendication 1, caractérisé en ce que les parois (111) de la queue (11) comprennent au moins un méplat plan et parallèle à l'axe (X-X).

3. Dispositif selon l'une quelconque des revendications 1 et 2, caractérisé en ce que les parois (211) de l'étrier (21) comprennent au moins un flanc plan et parallèle à l'axe (X-X).

4. Dispositif selon l'une quelconque des revendications 1 à 3, caractérisé en ce que cette douille (330) est mobile en translation suivant l'axe (X-X), en ce que la face d'appui (112) et/ou la contre-came (370) est inclinée relativement à l'axe (X-X) et sa distance va croissant dans le sens correspondant au passage de la douille de sa première à sa seconde position pour produire un coincement radial de ces parois (111, 211) et axial de ces face d'appui (112) et protubérance (332).

5. Dispositif selon l'une quelconque des revendications 1 à 3, caractérisé en ce que cette douille (330) est mobile en rotation suivant l'axe (X-X), en ce que la protubérance (332) porte la contre-came (370) qui est éventuellement excentrée relativement à l'axe X-X et en ce que les moyens de sollicitation élastiques (340) développent un effort de poussée et/ou de torsion.

6. Dispositif selon l'une quelconque des revendications 1 à 5, caractérisé en ce que cette chape (20) est munie d'une rampe (235) hélicoïdale périphérique et en ce que cette douille (330) est mobile suivant une trajectoire hélicoïdale et est munie d'une contre-rampe (335) coopérant avec la rampe (235).

7. Dispositif selon l'une quelconque des revendications 1 à 6, caractérisé en ce que la chape (20) présente un épaulement (27), en ce que la douille (330) présente un support (333) et en ce que les moyens de sollicitation élastiques (340) sont constitués d'un ressort à boudin placé entre cet épaulement (27) et ce support (333).

8. Dispositif selon l'une quelconque de revendications 1 à 7, caractérisé en ce que la chape (20) est associée à un élément d'articulation permettant un basculement suivant la direction (25).

9. Application du dispositif conforme à l'une quelconque des revendications 1 à 8 à une colonne de direction d'automobile.

## Patentansprüche

1. Vorrichtung zum Ankuppeln einer Stange (10) mit einem nicht kreisförmigen Endstück (11) und eines Gehaüse (20) mit einem U-förmigen Bügel (21), von denen eines der Teile einer führenden Welle zugeordnet ist und das andere Teile einer geführten Welle, wobei die Teile sich um eine gemeinsame Achse (X-X) drehen können, wobei weiterhin
- einerseits das Endstück (11) zwei konvergierende Wände (111) aufweist, die V-förmig relativ zueinander geneigt sind und deren Spitze sich in einer Ebene befindet, die durch die Achse (X-X) geht, sowie eine Stützfläche (112) gegenüber der Spitze des V, wobei weiterhin
- andererseits der Bügel (21) zwei Schenkel (22) aufweist, die über eine Brücke (23) miteinander verbunden sind, welche Teile zusammen eine Aufnahme (210) mit einer Längsachse aufweisen, die an wenigstens einer ihrer Enden offen ist und die am Umfang parallel zur Achse (X-X) in einer Öffnung (24) mündet, und die zwei konvergierende Wände (211) hat, die zueinander geneigt sind und bei denen die Spitze des V-Profils sich gegenüber der Öffnung (24) befindet, wobei weiterhin
- der Bügel (21) durch ein Kippen in einer Richtung (25) rechtwinklig zu der Achse (X-X) und in etwa rechtwinklig zu den Schenkeln (22) ausrichtbar ist derart, daß der Bügel (21) eine Darbietungsposition einnimmt, in der die Aufnahme (210) in Bezug auf die gemeinsame Achse (X-X) geneigt ist und vom Endstück (11) einen Abstand einnimmt, und wobei ausgehend von dieser Darbietungsposition der Bügel (21) um diese Richtung (25) kippbar ist, so daß das Endstück (11) seitlich in die Öffnung (24) des Bügels (21) eintritt, damit die Aufnahme (210) des Bügels (21) das Endstück (11) übergreift und damit die beiden Wände (211) des Bügels (21) jeweils in Kontakt mit den beiden Wänden (111) des Endstücks (11) kommen,
**dadurch gekennzeichnet**,
- daß eine Führungsfläche (321) am Umfang des Gehaüse (20) vorgesehen ist,
- daß eine Buchse (330) lokal das Gehaüse (20) umhüllt und mit einer Auflagefläche (331) versehen ist, die mit der Führungsfläche (321) des Gehaüse (20) zusammenarbeitet, wobei die Buchse (330) mit einem Vorsprung (332) versehen ist, der in die Öffnung (24) des Bügels (21) eingreift und der dazu bestimmt ist, in Kontakt mit der Stützfläche (112) des Endstücks (11) zu kommen derart, daß die Buchse (330) sich relativ auf dem Gehaüse (20) zwischen zwei Positionen verschieben kann: einer ersten Position zur Montage, in der die Öffnung (24) frei ist, und einer zweiten Position zum Ankuppeln, in der die Öffnung (24) zumindest teilweise abgedeckt und geschlossen ist,
- daß Federmittel (340) zwischen dem Gehaüse (20) und der Buchse (330) vorgesehen sind, um die Buchse (330) in die zweite Kupplungsposition zu drücken,
- daß ein Verschluß (350) vorgesehen ist, der mit dem Gehaüse (20) und mit der Buchse (330) zusammenarbeitet, um die Buchse in der ersten Montageposition zu halten, und zwar entgegen dem Federmittel und daß
- ein Nocken (360) und ein Gegennocken (370) vorgesehen sind, die von der Buchse (330) und vom Endstück (11) oder Bügel (21) getragen sind, wobei der Nocken (360) und der Gegennocken (370) die Erzeugende ihres beweglichen Kontakts derart ausgerichtet haben, daß, wenn die Buchse (330) von ihrer ersten Position zur zweiten Position geht, ihr Vorsprung (332) auf die Stützfläche (112) des Endstücks (11) drückt und dabei die einen gegen die anderen Wände (111, 211) drückt, derart, daß die Spitze des V-Profils der beiden Wände (111) des Endstücks (11) und die Spitze des V-Profils der beiden Wände (211) des Gehaüse (20) dazu neigen, sich aneinander anzunähern.

2. Vorrichtung nach Anspruch 1,
**dadurch gekennzeichnet**,
daß die Wände (111) des Endstücks (11) wenigstens ein ebenes Flachstück parallel zur Achse (X-X) aufweisen.

3. Vorrichtung nach Anspruch 1 oder 2,
**dadurch** **gekennzeichnet**,
daß die Wände (211) des Bügels (21) wenigstens einen ebenen Flansch parallel zur Achse (X-X) aufweisen.

4. Vorrichtung nach einem der Patentansprüche 1 bis 3,
**dadurch** **gekennzeichnet**,
daß die Buchse (330) entsprechend der Achse (X-X) translationsbeweglich ist, und daß die Stützfläche (112) und/oder der Gegennocken (370) relativ zur Achse (X-X) geneigt ist, wobei der Abstand beim Passieren der Buchse von der ersten Position in die zweite Position sich vergrößert, um ein radiales Verklemmen der Wände (111, 211) zu erzeugen sowie ein axiales Verklemmen der Stützfläche (112) und des Vorsprungs (332).

5. Vorrichtung nach einem der Patentansprüche 1 bis 3,
**dadurch** **gekennzeichnet**,
daß die Buchse (330) entsprechend der Achse (X-X) rotationsbeweglich ist, daß der Vorsprung (332) den Gegennocken (370) trägt, der ggf. relativ zur Achse (X-X) exzentrisch angeordnet ist, und daß das Federmittel (340) in drückender und/oder tordierender Richtung wirkt.

6. Vorrichtung nach einem der Patentansprüche 1 bis 5,
**dadurch gekennzeichnet**,
daß das Gehaüse (20) eine spiralförmige Rampe (235) am Umfang aufweist, und daß die Buchse (330) längs eines spiralförmigen Weges beweglich ist und eine Gegenrampe (335) aufweist, die mit der Rampe (235) zusammenarbeitet.

7. Vorrichtung nach einem der Patentansprüche 1 bis 6,
**dadurch gekennzeichnet**,
daß das Gehaüse (20) eine Schulter (27) aufweist, daß die Buchse (330) eine Stütze (333) aufweist, und daß das Federmittel (340) aus einer Wickelfeder oder Drahtfeder besteht, die zwischen der Schulter (27) und der Stütze (333) angeordnet ist.

8. Vorrichtung nach einem der Patentansprüche 1 bis 7,
**dadurch gekennzeichnet**,
daß das Gehaüse (20) einem Schwenkelement zugeordnet ist, das ein Kippen in der Richtung (25) zuläßt.

9. Anwendung der Vorrichtung nach einem der Patentansprüche 1 bis 8 auf eine Kfz-Lenksäule.

## Claims

1. Device for coupling a rod (10) having a non-circular end (11) and a yoke (20) having a U-shaped fork (21) which are associated with a drive shaft in the one case and with a driven shaft in the other case, and which are capable of turning on a common axis (X-X), in which,
- on the one hand, said end (11) has two convergent walls (111) inclined relative to each other in a V whose apex is in a plane passing through said axis (X-X) and also has a support face (112) situated opposite the apex of the V, and in which;
- on the other hand, said fork (21) has two branches (22) which are connected by a bridge (23) and which together bound a longitudinal axial passage (210) open at at least one of its ends and leading out on the periphery, parallel to the axis (X-X), through an aperture (24), and which has two convergent walls (211) facing one another and inclined relative to one an other in a V whose apex is situated opposite said aperture (24);
- and in which the fork (21) is movable by pivoting on a direction (25) perpendicular to said axis (X-X) and, approximately, to said branches (22), in order that the fork (21) takes up a presentation position in which said passage (210) is inclined relative to said common axis (X-X) and at a distance from said end (11) and from said presentation position, the fork (21) is pivoted about said direction (25) so that the end (11) penetrates laterally through the aperture (24) of the fork (21) in order that the passage (210) of the fork (21) straddles the end (11) and the two walls (211) of the fork (21) engage respectively the two walls (111) of the end (11),this device being characterized in that it comprises:
- a guide surface (321) on the periphery of the yoke (20);
- a sleeve (330) locally enclosing the yoke (20) and provided with a bearing surface (331) cooperating with the guiding surface (321) of the yoke (20), the sleeve (330) being provided with a protuberance (332) engaged in the aperture (24) of the fork (21) and intended to come into contact with the support face (112) of the end (11) in order that the sleeve (330) can be moved respectively on the yoke (20) between two positions a first mounting position in which said aperture (24) is free, and a second coupling position in which said aperture (24) is at least partially covered and closed;
- resilient biasing means (340) interposed between said yoke (20) and said sleeve (330) to urge the sleeve (330) towards its second coupling position;
- a locking bolt (350) cooperating with the yoke (20) and the sleeve (330) to hold the latter in its first assembly position against the resilient bias, and,
a cam (360) and a cam follower (370) which are carried by said sleeve (330) and said end (11) or said fork (21), said cam (360) and cam follower (370) having their movable contact generator being so oriented that when the sleeve (330) passes from its first position to its second position its protuberance (332) presses against said support face (112) of the end (11) and applies said walls (111, 211) against one another in such a manner that the V apex of the two walls (111) of the end (11) and the V apex of the two walls (211) of the yoke (20) tend to come closer to one another.

2. Device according to claim 1, characterized in that the walls (111) of the end (11) have at least one plane flat parallel to the axis (X-X).

3. Device according to either of claims 1 and 2, characterized in that the walls (211) of the fork (21) have at least one plane flank parallel to the axis (X-X).

4. Device according to any one of claims 1 to 3, characterized in that said sleeve (330) is capable of translatory movement on the axis (X-X), in that the support face (112) and/or the cam follower (370) is inclined relative to the axis (X-X) and its distance increases in the direction corresponding to the passing of the sleeve from its first to its second position in order to effect a radial wedging of said walls (111, 211) and axial wedging of said support face (112) and said protuberance (332).

5. Device according to any one of Claims 1 to 3, characterized in that said sleeve (330) is capable of rotational movement on the axis (X-X), in that the protuberance (332) carries the cam follower (370), which is optionally eccentric relative to the axis (X-X), and in that the resilient biasing means (340) develop a thrust and/or torsional force.

6. Device according to any one of Claims 1 to 5, characterized in that said yoke (20) is provided witch a peripheral helicoidal ramp (235) and in that said sleeve (330) is movable on a helicoidal path and is provided with a coacting ramp (335) cooperating with the ramp (235).

7. Device according to any one of Claims 1 to 6, characterized in that the yoke (20) has a shoulder (27), in that the sleeve (330) has a support (333), and in that the resilient biasing means (340) consist of a coil spring disposed between said shoulder (27) and said support (333).

8. Device according to any one of Claims 1 to 7, characterized in that the yoke (20) is associated with an articulation member permitting pivoting in the direction (25).

9. Application of the device according to any one of Claims 1 to 8 to a motor vehicle steering column.
